(19) Europäisches Patentamt
European Patent Office
Office européen des brevets

(11) EP 4 322 275 B1

(12) EUROPEAN PATENT SPECIFICATION

(45) Date of publication and mention of the grant of the patent:
**18.02.2026 Bulletin 2026/08**

(21) Application number: **22861755.1**

(22) Date of filing: **26.08.2022**

(51) International Patent Classification (IPC):
***H01M 10/0567*** *(2010.01)* ***H01M 10/0568*** *(2010.01)*
***H01M 10/052*** *(2010.01)* ***H01M 4/525*** *(2010.01)*
***H01M 10/0525*** *(2010.01)* *H01M 4/36 (2006.01)*

(52) Cooperative Patent Classification (CPC):
**H01M 4/525; H01M 10/0525; H01M 10/0567; H01M 10/0568;** H01M 4/364; H01M 2300/0042; Y02E 60/10

(86) International application number:
**PCT/KR2022/012816**

(87) International publication number:
**WO 2023/027547 (02.03.2023 Gazette 2023/09)**

(54) **NON-AQUEOUS ELECTROLYTE FOR LITHIUM SECONDARY BATTERY AND LITHIUM SECONDARY BATTERY INCLUDING THE SAME**

NICHTWÄSSRIGER ELEKTROLYT FÜR EINE LITHIUMSEKUNDÄRBATTERIE UND DIESEN ENTHALTENDE LITHIUMSEKUNDÄRBATTERIE

ÉLECTROLYTE NON-AQUEUX POUR UNE BATTERIE SECONDAIRE AU LITHIUM ET BATTERIE SECONDAIRE AU LITHIUM COMPRENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2021 KR 20210114193**

(43) Date of publication of application:
**14.02.2024 Bulletin 2024/07**

(73) Proprietor: **LG Energy Solution, Ltd.**
**Seoul 07335 (KR)**

(72) Inventors:
- **NOH, Jae Kyo**
  **Daejeon 34122 (KR)**
- **LEE, Kwan Soo**
  **Daejeon 34122 (KR)**
- **KOO, Seong Mo**
  **Daejeon 34122 (KR)**
- **GOVINDARAJ KANNAN, Aravindaraj**
  **Daejeon 34122 (KR)**
- **KIM, Jae Hee**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**CN-A- 111 900 480**
**KR-A- 20160 006 096**
**KR-A- 20160 006 096**
**KR-A- 20170 009 873**
**KR-A- 20190 054 920**
**KR-B1- 101 586 139**
**KR-B1- 101 724 004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This application claims priority from Korean Patent Application No. 10-2021-0114193, filed on August 27, 2021.

The present invention relates to a non-aqueous electrolyte for a lithium secondary battery and a lithium secondary battery including the same.

### BACKGROUND ART

Lithium secondary batteries are generally prepared through a method as follows. An electrode assembly is formed by disposing a separator between a positive electrode including a positive electrode active material formed of a transition metal oxide containing lithium and a negative electrode including a negative electrode active material capable of storing lithium ions, inserting the electrode assembly into a battery case, injecting a non-aqueous electrolyte that becomes a medium for delivering lithium ions, and then sealing the battery case.

Lithium secondary batteries are suitable to be downsized and have high energy density and operating voltage, and thus be applied to various fields such as mobile devices, electronic products, and electric vehicles. The wider applications of the lithium secondary batteries bring with it higher conditions for required physical properties and in particular, require the development of lithium secondary batteries which are stably workable even under high voltage and high temperature conditions.

Meanwhile, when the lithium secondary batteries are driven under high voltage and high temperature conditions, $PF_6^-$ anions may be thermally decomposed from lithium salts such as $LiPF_6$ included in electrolytes to generate Lewis acids such as $PF_5$, which react with moisture to produce HF. The decomposition products such as $PF_5$ and HF may not only destroy films formed on an electrode surface, but also cause decomposition of organic solvents. In addition, the decomposition products may react with decomposition products of positive electrode active materials to elute transition metal ions, and the eluted transition metal ions may be electrodeposited on the negative electrode to destroy the films formed on the negative electrode surface.

When the electrolyte decomposition reactions continue on the films destroyed as described above, performance of batteries is further deteriorated, and that requires the development of secondary batteries having sustainable excellent performance even under high voltage and high temperature conditions. In particular, it is known that oxidation of electrolytes is accelerated in a high voltage range of 4.25 V or higher, and the decomposed electrolytes cause side reactions at a positive electrode interface and a negative electrode interface to form an unstable structure, thereby reducing lifespan characteristics and high temperature storage characteristics.

CN 111900480 A provides a high-voltage lithium ion battery.

KR 2016 0006096 A relates to an electrolyte and a lithium secondary battery comprising the same.

### DISCLOSURE OF THE INVENTION

### TECHNICAL PROBLEM

An aspect of the present invention provides particularly a non-aqueous electrolyte that may effectively resolve an issue of metal ion elution of a positive electrode in a high voltage range of 4.25 V or higher and an issue of worsening decomposition of an SEI film of a negative electrode including a silicon-based negative electrode active material, and a lithium secondary battery including the same.

### TECHNICAL SOLUTION

According to an aspect of the present invention, there is provided a non-aqueous electrolyte for a lithium secondary battery, which includes an organic solvent, a lithium salt, a first additive which is a compound represented by Formula 1, a second additive which is lithium tetrafluoroborate, and a third additive including a saturated nitrile-based compound and an unsaturated nitrile-based compound, wherein the lithium salt is different from the second additive.

[Formula 1]

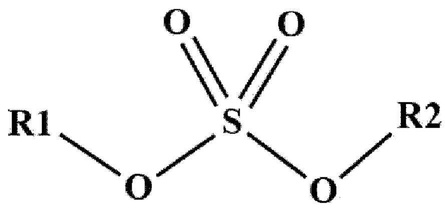

In the Formula 1,
R1 and R2 are each independently an alkyl group having 1 to 5 carbon atoms, or R1 and R2 are bonded to form a ring having 2 to 10 carbon atoms comprising a sulfate group.

According to another aspect of the present invention, there is provided a lithium secondary battery that includes a positive electrode including a positive electrode active material, a negative electrode including a negative electrode active material, a separator interposed between the positive electrode and the negative electrode, and the non-aqueous electrolyte for a lithium secondary battery.

## ADVANTAGEOUS EFFECTS

The present invention may provide a lithium secondary battery having excellent lifespan and resistance properties even at high voltage and high temperature by including the non-aqueous electrolyte for a lithium secondary battery.

## BRIEF DESCRIPTION OF THE DRAWINGS

FIG. 1 is a view showing discharge energy retention measured after high voltage charging and high temperature storage of lithium secondary batteries prepared in Examples and Comparative Examples.

## MODE FOR CARRYING OUT THE INVENTION

Hereinafter, the present invention will be described in more detail.

In general, anions such as $LiPF_6$, lithium salts widely used in lithium secondary batteries, form decomposition products such as hydrogen fluoride (HF) and $PF_5$ through thermal decomposition or moisture. These decomposition products have acid properties and deteriorate a film or an electrode surface in batteries.

To be specific, the decomposition products easily elute transition metals constituting a positive electrode into an electrolyte, and the eluted transition metal ions move to a negative electrode through the electrolyte and are then electrodeposited on a solid electrolyte interphase (SEI) film formed on the negative electrode, causing an additional electrolyte decomposition reaction.

This series of reactions reduces an amount of available lithium ions in batteries to deteriorate battery capacity and to cause an additional electrolyte decomposition reaction as well, leading to an increase in resistance.

In addition, when metal impurities are included in an electrode when a positive electrode is formed, the metal impurities are eluted from the positive electrode upon initial charging and move to a negative electrode, and are electrodeposited as metal ions on a surface of the negative electrode. The electrodeposited metal ions grow into dendrites to cause an internal short circuit of batteries, which becomes a major cause of low voltage failure.

In the present invention, the eluted metal ions that cause such deterioration and poor behavior are removed from the inside of batteries to prevent the ions from being electrodeposited of on an electrode surface and to form a solid film on positive/negative surfaces as well, and accordingly the elution of transition metals may be suppressed, the electrodeposition reaction at the negative electrode may be controlled, and electrochemical decomposition reactions of electrolytes may be controlled to control by-products in a gas phase, which are caused by the electrolyte decomposition, so as to improve durability of the batteries.

Specifically, the present inventors used a compound represented by Formula 1, $LiBF_4$, and a nitrile-based compound as additives of a non-aqueous electrolyte, and have determined that using this, decomposition products generated from lithium salts are effectively removed and a film is formed on positive and negative electrodes as well to prevent continuous decomposition reactions in the positive electrode and the organic solvent.

It is determined that the compound represented by Formula 1 firmly forms an SEI film on the initial negative electrode surface to generate an active site on the surface of the negative electrode and induces stable generation of $PF_6^-$ to reduce resistance of the negative electrode.

In addition, it is determined that as B-F bonds strongly, $LiBF_4$ forms a protective film on the surface of the positive electrode to suppress metal elution at high temperature and to improve electrical conductivity.

Therefore, when the compound represented by Formula 1 above and $LiBF_4$ are used together, the surfaces of the positive electrode and the negative electrode are each protected even in a high voltage range of 4.25 V or higher, where deterioration of batteries is accelerated due to oxidation of electrolytes and side reactions resulting therefrom, and high temperature storage characteristics may thus be improved.

In addition, it is determined that the non-aqueous electrolyte of the present invention includes an nitrile-based compound to form a stable SEI film on the surface of the negative electrode upon initial charging, and the nitrile-based compound has energy which is strong to be bonded to metal ions in a positive electrode active material, and may thus form a film having strong bonding strength on a surface of the positive electrode active material through stable and strong bonding with metal ions to produce synergies with the additives.

In particular, the non-aqueous electrolyte of the present invention includes both a saturated nitrile-based compound and an unsaturated nitrile-based compound as described in further detail below to produce synergies between the two as well. Specifically, for the unsaturated nitrile-based compound, unlike the saturated nitrile-based compound, may form a stable film through a strong binding bond with the positive electrode active material, and the saturated nitrile-based compound may prevent transition metals from moving to the negative electrode and being deposited through a chelating reaction with the transition metals remaining in the electrolyte and eluted from the positive electrode.

## Non-aqueous electrolyte

### (1) additive

A non-aqueous electrolyte of the present invention includes a first additive, which is a compound represented by Formula 1.

[Formula 1]

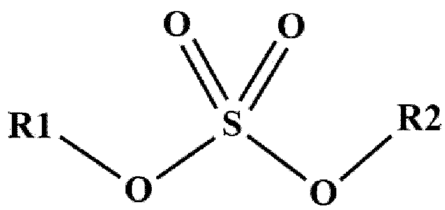

In the Formula 1,
R1 and R2 are each independently an alkyl group having 1 to 5 carbon atoms, or R1 and R2 are bonded to form a ring having 2 to 10 carbon atoms comprising a sulfate group.

In an embodiment of the present invention, the first additive may be represented by Formula 1-1.

[Formula 1-1]

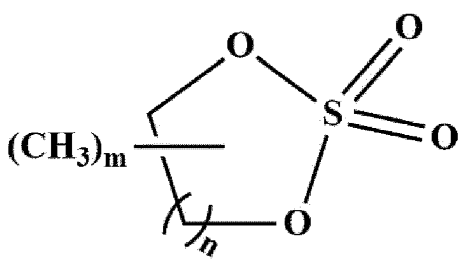

In the Formula 1-1,
m is an integer of 0 to 6, and n is an integer of 1 or 2.

In an embodiment of the present invention, in Formula 1-1 above, m may be 0, and n may be 1. That is, the first additive may be ethylene sulfate.

In an embodiment of the present invention, the first additive may be in an amount of 0.1 wt% to 2 wt%, preferably 0.1 wt% to 1 wt%, and more preferably 0.2 wt% to 0.5 wt%, with respect to a total weight of the non-aqueous electrolyte.

When the amount of the first additive is 0.1 wt% or greater, an SEI film may be firmly formed on a surface of a

negative electrode to prevent the SEI film from being collapsed due to electrolyte decomposition, and when the amount is 2 wt% or less, preferably an SEI film having a fair thickness may be formed on a surface of a negative electrode. When the thickness of the SEI film is excessively increased, the increase may serve as resistance against movement of lithium to cause loss of reversible lithium, resulting in capacity reduction.

The non-aqueous electrolyte of the present invention includes lithium tetrafluoroborate ($LiBF_4$) as a second additive.

In an embodiment of the present invention, the second additive may be in an amount of 0.1 wt% to 1 wt%, preferably 0.1 wt% to 0.5 wt%, and more preferably 0.1 wt% to 0.3 wt%, with respect to a total weight of the non-aqueous electrolyte.

When the amount of the second additive is 0.1 wt% or greater, a protective film is formed on a surface of a positive electrode to suppress metal elution from the positive electrode and to improve electrical conductivity, and when the amount is 1 wt% or less, preferably a protective film having a fair thickness is formed. When the thickness of the protective film formed on the surface of the positive electrode is excessively increased, the increase may serve as resistance to cause loss of available lithium, resulting in capacity reduction.

In the non-aqueous electrolyte of the present invention, a weight ratio of the first additive to the second additive may be 1:1 to 3:1, preferably more than 1:1 and 3:1 or less, and more preferably 2:1. When the first additive and the second additive are included in the above weight ratio, a film having a fair thickness is formed on the surfaces of the positive electrode and the negative electrode to suppress metal elution at high voltage and high temperature, to improve electrical conductivity, and to prevent the loss of available lithium.

The non-aqueous electrolyte of the present invention includes a third additive including a saturated nitrile-based compound and an unsaturated nitrile-based compound.

The saturated nitrile-based compound is at least any one selected from the group consisting of succinonitrile (SN), adiponitrile (ADN), acetonitrile, propionitrile, butyronitrile, valeronitrile, caprylonitrile, heptanenitrile, cyclopentane carbonitrile, cyclohexane carbonitrile, ethylene glycol bis(2-cyanoethyl)ether (ASA3), 1,3,6-hexane tricarbonitrile (HTCN), and 1,2,3-tris(2-cyanoethyl)propane (TCEP), preferably at least any one selected from the group consisting of succinonitrile, adiponitrile, and 1,3,6-hexane tricarbonitrile, and more preferably succinonitrile.

The unsaturated nitrile-based compound is at least any one selected from the group consisting of 1,4-dicyano-2-butene (DCB), 1,4-dicyano-2-methyl-2-butene, 1,4-dicyano-2-ethyl-2-butene, 1,4-dicyano-2, 3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, preferably at least any one selected from the group consisting of 1,4-dicyano 2-butene and 1,4-dicyano-2-methyl-2-butene, and more preferably 1,4-dicyano 2-butene.

In an embodiment of the present invention, the third additive may be succinonitrile and 1,4-dicyano 2-butene. In this case, as described above, in addition to the effect of forming a stable film on the positive/negative electrodes, deposition of transition metals may be prevented.

In an embodiment of the present invention, the third additive may be in an amount of 0.1 wt% to 2 wt%, preferably 0.1 wt% to 1 wt%, and more preferably 0.2 wt% to 0.8 wt%, with respect to a total weight of the non-aqueous electrolyte.

When the third additive in the non-aqueous electrolyte is 0.1 wt% or greater, the above-described effect of the nitrile-based compound may be significantly obtained, and when the amount of the third additive is 2 wt% or less, a film having a fair thickness is formed to prevent an increase in resistance, and thus preferable battery performance is maintained.

The non-aqueous electrolyte of the present invention may optionally further include the following fourth additives as needed to prevent electrode collapse from being caused by decomposition of a non-aqueous electrolyte in a high voltage environment, or to further improve effects of low-temperature high-rate discharge properties, high-temperature stability, overcharge prevention, and suppression of battery expansion at high temperature.

The fourth additive may be at least any one selected from the group consisting of a cyclic carbonate-based compound, a halogen-substituted carbonate-based compound, a sultone-based compound, a phosphate-based or phosphite-based compound, a borate-based compound, an amine-based compound, a silane-based compound, a benzene-based compound, and a lithium salt-based compound.

The cyclic carbonate-based compound may be vinylene carbonate (VC), vinyl ethylene carbonate (VEC), or a mixture thereof, specifically vinylene carbonate.

The halogen-substituted carbonate-based compound may be fluoroethylene carbonate (FEC).

The sultone-based compound is a material capable of forming a stable SEI film through a reduction reaction on a surface of a negative electrode, and may be at least any one compound selected from the group consisting of 1,3-propane sultone (PS), 1,4-butane sultone, ethensultone, 1,3-propene sultone (PRS), 1,4-butene sultone, and 1-methyl-1,3-propene sultone, and specifically may be 1,3-propane sultone (PS).

The phosphate-based or phosphite-based compound may be at least any one compound selected from the group consisting of lithium difluoro(bisoxalato)phosphate, lithium difluorophosphate, tris(trimethyl silyl)phosphate, tris(trimethyl silyl)phosphite, tris(2,2,2-trifluoroethyl)phosphate, and tris(trifluoroethyl)phosphite.

The borate-based compound may be lithium tetraphenylborate.

The amine-based compound may be triethanolamine, ethylenediamine, or a mixture thereof, and the silane-based compound may be tetravinylsilane.

The benzene-based compound may be at least any one selected from the group consisting of monofluorobenzene, difluorobenzene, trifluorobenzene, and tetrafluorobenzene.

The lithium salt-based compound is a compound different from the lithium salt and the second additive included in the non-aqueous electrolyte, and may be at least any one selected from the group consisting of lithium difluorophosphate (LiDFP; $LiPO_2F_2$), lithium bisoxalatoborate (LiBOB; $LiB(C_2O_4)_2$), and lithium difluoro(bisoxalato) phosphate (LiDFOP).

Preferably, the additive of the non-aqueous electrolyte according to an embodiment of the present invention may further include vinylene carbonate (VC), 1,3-propanesultone (PS), or a mixture thereof as the fourth additive, and more preferably may include both vinylene carbonate (VC) and 1,3-propanesultone (PS).

Meanwhile, the fourth additive may be in an amount of 0.1 wt% to 3 wt%, preferably 0.1 wt% to 2 wt%, and more preferably 0.3 wt% to 2 wt%, with respect to a total weight of the non-aqueous electrolyte. When the amount of the fourth additive is in the above range, gas generation and collapse of a surface structure may be prevented.

### (2) Organic solvent

The non-aqueous electrolyte of the present invention includes an organic solvent.

As the organic solvent, various organic solvents commonly used in lithium electrolytes may be used without limitation. For example, the organic solvent may be a cyclic carbonate-based solvent, a linear carbonate-based solvent, a linear ester-based solvent, a cyclic ester-based solvent, a nitrile-based solvent, or a mixture thereof, and may preferably include a cyclic carbonate-based solvent and a linear carbonate-based solvent. In this case, a volume ratio of the cyclic carbonate-based solvent to the linear carbonate-based solvent may be 3:7 to 1:9.

The cyclic carbonate-based solvent as a high-viscosity organic solvent has a high dielectric constant to dissociate lithium salts well in an electrolyte, and may be at least any one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and specifically may be ethylene carbonate (EC).

In addition, the linear carbonate-based solvent is an organic solvent having a low viscosity and a low dielectric constant, and may be at least any one selected from the group consisting of dimethyl carbonate (DMC), diethyl carbonate (DEC), dipropyl carbonate, ethylmethyl carbonate (EMC), methylpropyl carbonate, and ethylpropyl carbonate, and specifically may be dimethyl carbonate (DMC) and ethylmethyl carbonate (EMC).

As the organic solvent, a mixture of a cyclic carbonate-based solvent and a linear carbonate-based solvent is preferably used to prepare an electrolyte having high ionic conductivity.

The linear ester-based solvent may be at least any one selected from the group consisting of methyl acetate, ethyl acetate, propyl acetate, methyl propionate, ethyl propionate, propyl propionate, and butyl propionate.

The cyclic ester-based solvent may be at least any one selected from the group consisting of γ-butyrolactone, γ-valerolactone, γ-caprolactone, σ-valerolactone, and ε-caprolactone.

Except for the amounts of other components (i.e., additive and lithium salt) excluding the organic solvent in the total weight of the non-aqueous electrolyte, the remainder may all be organic solvents unless otherwise specified.

### (3) Lithium salt

The non-aqueous electrolyte of the present invention includes a lithium salt different from the second additive.

As the lithium salt, those commonly used in electrolytes for lithium secondary batteries may be used without limitation, and specifically, the lithium salt may include $Li^+$ as a cation, and include at least any one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_4^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $BF_2C_2O_4CHF^-$, $PF_4C_2O_4^-$, $PF_2C_4O_8^-$, $PO_2F_2^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$ as an anion.

Specifically, the lithium salt may include at least any one selected from the group consisting of $LiPF_6$, $LiN(FSO_2)_2$ (LiFSI), $LiClO_4$, LiTFSI, lithium bis (pentafluoroethanesulfonyl) imide (LiBETI), $LiSO_3CF_3$, $LiPO_2F_2$, lithium bis(oxalate) borate (LiBOB), lithium difluoro(oxalate)borate (LiFOB), lithium difluoro(bisoxalato)phosphate (LiDFBP), lithium tetrafluoro(oxalate)phosphate (LiTFOP), and lithium fluoromalonato(difluoro)borate (LiFMDFB), and preferably may be $LiPF_6$, $LiN(FSO_2)_2$(LiFSI), or a mixture thereof. When $LiPF_6$ and LiFSI are used together as lithium salts, the effect of $PF_6^-$ may be suppressed to improve high temperature properties.

In an embodiment of the present invention, the lithium salt in the non-aqueous organic solution including the lithium salt and the organic solvent may have a concentration of 0.3 M to 3.0 M, specifically 1.0 M to 2.0 M, and more

specifically 1.4 M to 2.0 M. When the concentration of the lithium salt is within the above range, an effect of improving low temperature output and cycle properties is sufficiently secured, and an excessive increase in viscosity and surface tension is prevented to obtain a proper impregnation property of electrolytes.

## Lithium secondary battery

Next, a lithium secondary battery according to the present invention will be described.

The lithium secondary battery according to the present invention includes a positive electrode including a positive electrode active material, a negative electrode including a negative electrode active material, a separator interposed between the positive electrode and the negative electrode, and a non-aqueous electrolyte, and in this case, the non-aqueous electrolyte is the non-aqueous electrolyte according to the present invention. Since the non-aqueous electrolyte has been described above, a description thereof will be omitted, and other components will be described below.

### (1) Positive electrode

The positive electrode according to the present invention includes a positive electrode active material, and may be prepared by applying a positive electrode slurry including a positive electrode active material, a binder, a conductive material, and a solvent onto a positive electrode collector, followed by drying and rolling.

The positive electrode collector is not particularly limited as long as it has conductivity without causing chemical changes in batteries. For example, stainless steel, aluminum, nickel, titanium, fired carbon, or aluminum or stainless steel that is surface-treated with carbon, nickel, titanium, silver, or the like may be used.

The positive electrode active material is a compound enabling reversible intercalation and deintercalation of lithium, and may include at least any one selected from the group consisting of LCO($LiCoO_2$), LNO($LiNiO_2$, $Li_2NiO_2$), LMO ($LiMnO_2$), $LiMn_2O_4$, $LiCoPO_4$, LFP ($LiFePO_4$), and $LiNi_{1-x-y-z}Co_xM^1_yM^2_zO_2$ ($M^1$ and $M^2$ are each independently any one selected from the group consisting of Al, Ni, Co, Fe, Mn, V, Cr, Ti, W, Ta, Mg, and Mo, and x, y, and z are each independently an atomic fraction of oxide composition elements where $0 \leq x < 0.5$, $0 \leq y < 0.5$, $0 \leq z < 0.5$, and $x+y+z=1$ are satisfied) including $LiNiMnCoO_2$ or the like.

In an embodiment of the present invention, the positive electrode active material is a lithium composite transition metal oxide having a nickel amount of 70 mol% or greater, preferably 80 mol% or greater, and more preferably 85 mol% or greater, among all metals except lithium.

In an embodiment of the present invention, the positive electrode active material may be represented by Formula 2.

[Formula 2] $Li_{1+e}(Ni_aCo_bMn_cM_d)O_2$

in the Formula 2,

M is at least any one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
a, b, c, and d are each an atomic fraction of independent elements, and
$0 \leq e \leq 0.5$, $0.8 \leq a < 1$, $0 < b \leq 0.15$, $0 < c \leq 0.15$, $0 \leq d \leq 0.1$, and $a+b+c+d=1$ are satisfied.

Preferably, in Formula 2, a, b, c, and d may each satisfy $0.85 \leq a < 1$, $0 < b \leq 0.1$, $0 < c \leq 0.1$, $0 \leq d \leq 0.05$, and $a+b+c+d= 1$.

More preferably, in Formula 2, a, b, c, and d may each satisfy $0.88 \leq a < 1$, $0 < b \leq 0.09$, $0 < c \leq 0.05$, and $0 \leq d \leq 0.03$.

The positive electrode active material of the present invention has a high amount of Ni to obtain high energy density but exhibit deterioration of stability at high voltage due to metal elution of Ni, Co, and Mn as a phase transition from a surface layered structure to a rock salt structure takes place, and the non-aqueous electrolyte according to an embodiment of the present invention provides an effect of strengthening an electrode film to prevent performance degradation at high voltage and high temperature so as to improve performance of a lithium secondary battery including a high nickel positive electrode active material.

In an embodiment of the present invention, the positive electrode may further include a compound represented by Formula 3 containing an excess of lithium.

[Formula 3] $Li_2M^a_{1-k}M^b_kO_2$

In the Formula 3 above,

$M^a$ is at least any one element selected from the group consisting of Ni and Cu,

$M^b$ is at least any one element selected from the group consisting of Mn, Fe, Co, Zn, Mg, and Cd, and
k satisfies $0 \leq k < 1$.

In an embodiment of the present invention, $M^a$ in the Formula 3 is Ni.

In an embodiment of the present invention, the compound represented by the Formula 3 is $Li_2NiO_2$.

Using a silicon-based material having a high capacity as a negative electrode active material is preferable to obtain a battery having high energy density, but as a silicon-based negative electrode active material has a high rate of lithium ion loss due to irreversible reactions upon initial charge/discharge, when used together with a positive electrode active material having high initial charge/discharge efficiency, charge capacity may decrease and lithium may be deposited.

According to an embodiment of the present invention, when the compound represented by the Formula 3 is used together with a positive electrode active material, the compound serves as a sacrificial positive electrode material that compensates for the high initial irreversible capacity in a lithium secondary battery containing a silicon-based material as a negative electrode active material to be preferable as being applicable to a battery having a high energy density.

In an embodiment of the present invention, the positive electrode may have an initial efficiency of 85% to 89%. In this case, lithium ion loss in the lithium secondary battery including the silicon-based negative electrode active material may be reduced without including the compound represented by the Formula 3 as the sacrificial positive electrode material.

In this case, the initial efficiency refers to a ratio of initial discharge capacity to initial charge capacity determined after charging and discharging a half cell of a coin cell type, which is prepared using a positive electrode including a lithium composite transition metal oxide represented by the Formula 2 as a positive electrode active material, a lithium metal counter electrode, and an electrolyte obtained by dissolving 1.0 M of $LiPF_6$ in a mixed solvent of ethylene carbonate and dimethyl carbonate (3:7 volume ratio), once at a rate of 0.2 C in the range of 2.5 V to 4.25 V.

The positive electrode active material may be included in an amount of 80 wt% to 99 wt%, specifically, 90 wt% to 99 wt%, with respect to a total weight of solid content in a positive electrode slurry. In this case, when the amount of the positive electrode active material is 80 wt% or less, energy density may be lowered to reduce capacity.

The binder is a component that assists in binding between an active material and a conductive material and in binding with a collector, and may be commonly added in an amount of 1 wt% to 30 wt% with respect to a total weight of solid content in a positive electrode slurry. Examples of such binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, or various copolymers thereof.

In addition, the conductive material of the positive electrode slurry is a material that provides conductivity without causing chemical changes in batteries, and may be added in an amount of 0.5 wt% to 20 wt% with respect to a total weight of solid content in the positive electrode slurry.

The conductive material of the positive electrode slurry may be selected from carbon black such as acetylene black, Ketjen black, channel black, furnace black, lamp black, and thermal black; graphite powder such as natural graphite, artificial graphite, carbon nanotubes, and graphite; conductive fibers such as carbon fibers and metal fibers; conductive powder such as carbon fluoride powder, aluminum powder, and nickel powder; conductive whiskers such as zinc oxide and potassium titanate; conductive metal oxides such as titanium oxide; and conductive materials such as polyphenylene derivatives, but is not limited thereto.

In addition, the solvent of the positive electrode slurry may include an organic solvent such as NMP, and may be used in an amount such that desirable viscosity is obtained when the positive electrode active material, the binder, and the conductive material are included. For example, the solvent of the positive electrode slurry may be included in an amount such that a concentration of solid content in the positive electrode slurry including the positive electrode active material, the binder, and the conductive material is 40 wt% to 90 wt%, preferably 50 wt% to 80 wt%.

### (2) Negative electrode

A negative electrode according to the present invention includes a negative electrode active material, and may be prepared by applying a negative electrode slurry including a negative electrode active material, a binder, a conductive material, and a solvent onto a negative electrode collector, followed by drying and rolling.

The negative electrode collector generally has a thickness of 3 $\mu$m to 500 $\mu$m. The negative electrode collector is not particularly limited as long as it has high conductivity without causing chemical changes in batteries. For example, copper, stainless steel, aluminum, nickel, titanium, fired carbon, copper or stainless steel which is surface-treated with carbon, nickel, titanium, silver, or the like, or an aluminum-cadmium alloy may be sued. In addition, as in the positive electrode collector, the negative electrode collector may have fine irregularities on a surface thereof to improve bonding strength of a negative electrode active material, and the negative electrode collector may be used in various forms such as

a film, a sheet, a foil, a net, a porous body, a foam body, and a non-woven fabric body.

In an embodiment of the present invention, the negative electrode active material may include a silicon-based material, a carbon-based material, or a mixture thereof, and preferably may include a carbon-based material and a silicon-based material.

The silicon-based material is at least any one element selected from the group consisting of Si, $SiO_x$ ($0<x<2$) and a Si-Y alloy (where Y is an element selected from an alkali metal, an alkaline earth metal, a Group 13 element, a Group 14 element, a transition metal, a rare earth element, and a combination thereof, and is not Si), and is preferably SiO.

The silicon-based negative electrode active material has a capacity nearly 10 times higher than that of graphite to lower mass loading ($mg \cdot cm^{-2}$), thereby improving quick charging performance of batteries. However, the silicon-based negative electrode active material has a high rate of lithium ion loss by irreversible reactions and a large volume change, which may adversely affect lifespan, but may overcome the obstacle by applying the non-aqueous electrolyte described above. Specifically, a negative electrode containing a silicon-based negative electrode active material contains more oxygen-rich (O-rich) components in an SEI film than a negative electrode of 100% graphite, and the SEI film containing such oxygen-rich components tends to be more easily decomposed when Lewis acid such as HF or $PF_5$ is present in an electrolyte. Therefore, it is important for the negative electrode containing a silicon-based negative electrode active material to maintain a stable SEI film, and as a lithium secondary battery according to the present invention includes the non-aqueous electrolyte described above, the SEI film decomposition attendant upon using a negative electrode containing a silicon-based active material may thus be effectively prevented.

In an embodiment of the present invention, the silicon-based material may be in an amount of 1 wt% to 20 wt%, preferably 3 wt% to 15 wt%, with respect to a total weight of the negative electrode active material. When the silicon-based material is included in the above range, negative electrode capacity and quick charging performance may be improved.

In an embodiment of the present invention, as the carbon-based material, materials generally used in lithium ion secondary batteries may be used without particular limitation, and as typical examples thereof, at least any one selected from the group consisting of crystalline carbon such as natural graphite and amorphous carbon such as soft carbon (low-temperature fired carbon), hard carbon, mesophase pitch carbide, and fired coke may be used.

The negative electrode active material of the present invention may include, in addition to the silicon-based material and the carbon-based material, metals or alloys of these metals and lithium; metal complex oxide; materials which may be doped and undoped with lithium; and transition metal oxide.

As the metals or alloys of these metals and lithium, metals selected from the group consisting of Cu, Ni, Na, K, Rb, Cs, Fr, Be, Mg, Ca, Sr, Si, Sb, Pb, In, Zn, Ba, Ra, Ge, Al, and Sn or alloys of these metals and lithium may be used.

Any one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$,

$Li_xFe_2O_3$ ($0 \le x \le 1$), $Li_xWO_2$ ($0 \le x \le 1$), and $Sn_xMe_{1-x}Me'_yO_z$ (Me: Mn, Fe, Pb, Ge; Me': Al, B, P, Si, Groups 1, 2, and 3 elements of the periodic table, or halogen; $0<x\le 1$; $1\le y\le 3$; $1\le z\le 8$) may be used as the metal composite oxide.

The material, which may be doped and undoped with lithium, may include Si, $SiO_x$ ($0<x<2$), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO2, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

Examples of the transition metal oxide may include lithium-containing titanium composite oxide (LTO), vanadium oxide, and lithium vanadium oxide.

The negative electrode active material may be included in an amount of 80 wt% to 99 wt% with respect to a total weight of solid content in the negative electrode slurry.

The binder is a component that assists in binding between a conductive material, an active material, and a current collector, and may be commonly added in an amount of 1 wt% to 30 wt% with respect to the total weight of solid content in the negative electrode slurry. Examples of such binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluorine rubber, or various copolymers thereof.

The conductive agent is a component for further improving conductivity of the negative electrode active material, and may be added in an amount of 0.5 wt% to 20 wt% with respect to the total weight of solid content in the negative electrode slurry. Such conductive agent is not particularly limited as long as it has conductivity without causing chemical changes in batteries, and for example, may be selected from carbon black such as acetylene black, Ketjen black, channel black, furnace black, lamp black, and thermal black; graphite powder such as natural graphite, artificial graphite, carbon nanotubes, and graphite; conductive fibers such as carbon fibers and metal fibers; conductive powder such as carbon

fluoride powder, aluminum powder, and nickel powder; conductive whiskers such as zinc oxide and potassium titanate; conductive metal oxides such as titanium oxide; and conductive materials such as polyphenylene derivatives.

The solvent of the negative electrode slurry may include water or an organic solvent such as NMP and alcohol, and may be used in an amount such that desirable viscosity is obtained when the negative electrode active material, the binder, and the conductive material are included. For example, the solvent of the negative electrode slurry may be included in an amount such that a concentration of solid content in the slurry including the positive electrode active material, the binder, and the conductive material is 30 wt% to 80 wt%, preferably 40 wt% to 70 wt%.

**(3) Separator**

A lithium secondary battery according to the present invention includes a separator between the positive electrode and the negative electrode.

The separator separates the negative electrode and the positive electrode and provides a movement path of lithium ions, and any separator may be used without particular limitation as long as it is typically used in a secondary battery, and particularly, a separator having low resistance to ion movement of an electrolyte, excellent electrolyte impregnation ability, and excellent safety may be desirable.

Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. In addition, a typical porous non-woven fabric, for example, a non-woven fabric formed of glass fiber having a high melting point, polyethylene terephthalate fiber, or the like may be used. Furthermore, a coated separator including a ceramic component or a polymer component may be used to secure heat resistance or mechanical strength, and the separator having a single layer or multilayer structure may be used.

The above lithium secondary battery according to the present invention may be usefully used in portable devices such as a mobile phone, a laptop computer, and a digital camera, and in electric cars such as a hybrid electric vehicle (HEV).

Therefore, according to another embodiment of the present invention, a battery module including the lithium secondary battery as a unit cell, and a battery pack including the same are provided.

The battery module or the battery pack may be used as a power source of one or more medium- and large-sized devices, for example, a power tool, an electric car such as an electric vehicle (EV), a hybrid electric vehicle (HEV), and a plug-in hybrid electric vehicle (PHEV), and a power storage system.

The outer shape of the lithium secondary battery of the present invention is not particularly limited, but may be a cylindrical shape using a can, a prismatic shape, a pouch shape, or a coin shape.

The lithium secondary battery according to the present invention may be used in a battery cell which is used as a power source for a small-sized device, and may also be preferably used as a unit cell for a medium- and large-sized battery module including a plurality of battery cells.

Hereinafter, the present invention will be described in detail through specific examples.

**<Examples and Comparative Examples: Manufacture of lithium secondary battery>**

**Comparative Example 1.**

(Preparation of non-aqueous electrolyte solution)

Ethylene carbonate (EC), ethyl methyl carbonate (EMC), and dimethyl carbonate (DMC) were mixed in a volume ratio of 20:10:70, and then dissolved such that $LiPF_6$ reached 1.4 M to prepare a non-aqueous organic solution. 2 wt% of vinylene carbonate (VC), 1 wt% of 1,3-propanesultone (PS), 0.3 wt% of succinonitrile (SN), 0.3 wt% of 1,4-dicyano 2-butene (DCB), and the remainder of the non-aqueous organic solution were mixed to prepare 100 wt% of a non-aqueous electrolyte.

(Manufacture of lithium secondary battery)

$Li[Ni_{0.88}Co_{0.07}Mn_{0.04}Al_{0.01}]O_2$ (NCMA) and $Li_2NiO_2$ (LNO) (weight ration of NCMA:LNO=95:5) as a positive electrode active material, a conductive material (carbon black), and a binder (polyvinylidene fluoride) were added to N-methyl-2-pyrrolidone (NMP) in a weight ratio of 97.5:1:1.5 to prepare a positive electrode slurry (solid content: 70 wt%) The positive electrode slurry was applied onto a 15 μm-thick aluminum (Al) thin film, which is a positive electrode collector, and dried, and then roll-pressed to prepare a positive electrode.

In addition, a negative electrode active material in which natural graphite and silicon were blended in a weight

ratio of 95:5, styrene-butadiene rubber (SBR) as a binder, sodium carboxymethylcellulose (CMC) as a thickener, and carbon black as a conductive material were mixed in a weight ratio of 97:1:1:1 and then added to NMP as a solvent to prepare a negative electrode mixture slurry. The negative electrode mixture slurry was applied onto a 10 μm-thick copper (Cu) thin film, which is a negative electrode collector, and dried to prepare a negative electrode, and then roll-pressed to prepare a negative electrode.

A porous polypropylene separator was interposed between the positive electrode and the negative electrode in a dry room, and then the prepared non-aqueous electrolyte was injected to prepare a coin-shaped half-cell type lithium secondary battery.

**Comparative Example 2.**

A lithium secondary battery was prepared in the same manner as in Comparative Example 1, except that 0.2 wt% of ethylene sulfate (Esa) was further added upon the preparation of a non-aqueous electrolyte.

**Comparative Example 3.**

A lithium secondary battery was prepared in the same manner as in Comparative Example 1, except that 0.2 wt% of $LiBF_4$ was further added upon the preparation of a non-aqueous electrolyte.

**Comparative Example 4.**

A lithium secondary battery was prepared in the same manner as in Comparative Example 1, except that succinonitrile and 1,4-dicyano 2-butene were not added, and 0.4 wt% of ethylene sulfate and 0.2 wt% of $LiBF_4$ were further added upon the preparation of a non-aqueous electrolyte.

**Comparative Example 5.**

A lithium secondary battery was prepared in the same manner as in Comparative Example 1, except that 1,4-dicyano 2-butene was not added upon the preparation of a non-aqueous electrolyte.

**Comparative Example 6.**

A lithium secondary battery was prepared in the same manner as in Comparative Example 1, except that succinonitrile was not added upon the preparation of a non-aqueous electrolyte.

**Comparative Example 7.**

A lithium secondary battery was prepared in the same manner as in Comparative Example 1, except that 1,4-dicyano 2-butene was not added, and 0.4 wt% of ethylene sulfate and 0.2 wt% of $LiBF_4$ were further added upon the preparation of a non-aqueous electrolyte.

**Comparative Example 8.**

A lithium secondary battery was prepared in the same manner as in Comparative Example 1, except that succinonitrile was not added, and 0.4 wt% of ethylene sulfate and 0.2 wt% of $LiBF_4$ were further added upon the preparation of a non-aqueous electrolyte.

**Example 1.**

A lithium secondary battery was prepared in the same manner as in Comparative Example 1, except that 0.4 wt% of ethylene sulfate and 0.2 wt% of $LiBF_4$ were further added upon the preparation of a non-aqueous electrolyte.

**Example 2.**

A lithium secondary battery was prepared in the same manner as in Comparative Example 1, except that 0.2 wt% of ethylene sulfate and 0.2 wt% of $LiBF_4$ were further added upon the preparation of a non-aqueous electrolyte.

**Example 3.**

A lithium secondary battery was prepared in the same manner as in Comparative Example 1, except that 0.8 wt% of ethylene sulfate and 0.2 wt% of $LiBF_4$ were further added upon the preparation of a non-aqueous electrolyte.

**Example 4.**

A lithium secondary battery was manufactured in the same manner as in Example 1, except that a positive electrode having an initial efficiency of 87% was used instead of the positive electrode of Example 1.

Specifically, $LiNi_{0.093}Co_{0.02}Mn_{0.03}Al_{0.02}O_2$ as a positive electrode active material, a conductive material (carbon black), and a binder (polyvinylidene fluoride) were added to N-methyl-2-pyrrolidone (NMP) in a weight ratio of 97.5:1:1.5 to prepare a positive electrode slurry (solid content: 70 wt%) The positive electrode slurry was applied onto a 15 μm-thick aluminum (Al) thin film, which is a positive electrode collector, and dried, and then roll-pressed to prepare a positive electrode having an initial efficiency of 87%. In this case, the initial efficiency refers to a ratio of initial discharge capacity to initial charge capacity determined after charging and discharging a half cell of a coin cell type, which is prepared using the prepared positive electrode, a lithium metal counter electrode, and an electrolyte obtained by dissolving 1.0 M of $LiPF_6$ in a mixed solvent of ethylene carbonate and dimethyl carbonate (3:7 volume ratio), once at a rate of 0.2 C in the range of 2.5 V to 4.25 V.

**<Experimental example: Performance evaluation of lithium secondary battery>**

**Experimental Example 1. Evaluation** of **high temperature (55 °C) storage characteristics**

Each lithium secondary battery prepared in Examples and Comparative Examples was activated at a CC of 0.1 C, and then subjected to degassing.

Then, the lithium secondary batteries were charged at a CC of 0.33 C up to 4.25 V under the condition of constant current-constant voltage (CC-CV) at 25 °C, and then subjected to 0.05 C current cut, and discharged at 0.33 C up to 2.5 V under the condition of CC.

Thereafter, the lithium secondary batteries were recharged at a CC of 0.33 C up to a SOC of 100% and then stored at a high temperature of 60 °C for 8 weeks.

After CC-CV charging and discharging the lithium secondary batteries at a rate of 0.33 C every 4 weeks, discharge energy was measured using a PNE-0506 charging/discharging device (manufacturer: PNE Solution, 5 V, 6 A), and this was calculated using the Equation (1) to determine discharge energy retention, and the results are shown in Table 1 and FIG. 1.

In addition, DC-iR (Direct Current Internal Resistance) was calculated through voltage drop shown when discharge pulse was applied at 2.5 C at a SOC of 50% for 10 seconds, and this was calculated using the Equation (2) to determine resistance increase (%), and the results are shown in Table 1 and FIG. 1. In this case, the voltage drop was measured using a PNE-0506 charging/discharging device (manufacturer: PNE Solution, 5 V, 6 A) .

discharge energy retention(%) = (discharge energy after high temperature storage / discharge energy before high temperature storage) × 100 Equation (1):

resistance increase (%) = {(resistance value after high temperature storage - initial resistance value)/ initial resistance value} × 100 Equation (2):

[Table 1]

| | Additive | 1st: 2nd additive weight ratio | 4 weeks after storage | | 8 weeks after storage | |
|---|---|---|---|---|---|---|
| | | | Discharge energy retention (%) | Resistance increase rate (%) | Discharge energy retent ion (%) | Resistance increase rate (%) |
| Comparative Example 1 | VC+PS+SN+D CB | - | 95.3 | 11.2 | 83.3 | 36.7 |
| Comparative Example 2 | VC+PS+SN+D CB+Esa | - | 95.2 | 10.2 | 87.9 | 28.3 |

(continued)

| | Additive | 1st: 2nd additive weight ratio | 4 weeks after storage | | 8 weeks after storage | |
|---|---|---|---|---|---|---|
| | | | Discharge energy retention (%) | Resistance increase rate (%) | Discharge energy retent ion (%) | Resistance increase rate (%) |
| Comparative Example 3 | VC+PS+SN+D CB+$LiBF_4$ | - | 95.3 | 8.2 | 87.2 | 29.3 |
| Comparative Example 4 | VC+PS+Esa+ $LiBF_4$ | 2:1 | 95.1 | 9.5 | 85.4 | 30.2 |
| Comparative Example 5 | VC+PS+SN | - | 94.8 | 13.5 | 80.1 | 45.3 |
| Comparative Example 6 | VC+PS+DCB | - | 94.7 | 14.3 | 81.2 | 41.8 |
| Comparative Example 7 | VC+PS+SN+E sa+$LiBF_4$ | 2:1 | 94.9 | 9.1 | 87.6 | 29.5 |
| Comparative Example 8 | VC+PS+DCB+ Esa+$LiBF_4$ | 2:1 | 95.0 | 9.3 | 87.8 | 29.1 |
| Example 1 | VC+PS+SN+D CB+Esa+LiB $F_4$ | 2:1 | 95.5 | 7.7 | 90.2 | 24.2 |
| Example 2 | VC+PS+SN+D CB+Esa+LiB $F_4$ | 1:1 | 95.5 | 8.5 | 88.5 | 27.3 |
| Example 3 | VC+PS+SN+D CB+Esa+LiB $F_4$ | 4:1 | 95.5 | 9.2 | 88.1 | 27.6 |
| Example 4 | VC+PS+SN+D CB+Esa+LiB $F_4$ | 2:1 | 95.4 | 8.1 | 89.6 | 24.9 |

Based on the results of Table 1 and FIG. 1, it is determined that lithium secondary batteries of Examples 1 to 4 to which a non-aqueous electrolyte solution containing all of first to third additives of the present invention was applied exhibited greater performance after high temperature storage than lithium secondary batteries of Comparative Examples 1 to 3, 5, and 6 to which a non-aqueous electrolyte not containing the first additive and/or the second additive was applied, a lithium secondary battery of Comparative Example 4 to which a non-aqueous electrolyte not containing the third additive was applied, and lithium secondary batteries of Comparative Examples 7 and 8 containing only one nitrile-based additive as the third additive.

Specifically, it is determined that the lithium secondary batteries prepared in Examples 1 to 4 had excellent energy retention and resistance properties even under adverse conditions of high voltage charging and high temperature storage, while including a high nickel positive electrode active material and a silicon-based negative electrode active material.

Meanwhile, it is determined that even with the inclusion of both the first and second additives, the lithium secondary battery of Comparative Example 7 to which an electrolyte containing SN alone, which is a saturated nitrile-based, was applied as the third additive, and the lithium secondary battery of Comparative Example 8 to which an electrolyte containing DCB alone, which is an unsaturated nitrile-based compound, was applied exhibited lower energy retention and resistance properties after high voltage charging and high temperature storage than the lithium secondary battery of Example 1.

In addition, it is determined that even among the lithium secondary batteries using a non-aqueous electrolyte not containing the first and second additives, when comparing the lithium secondary battery of Comparative Example 1 with the lithium secondary batteries of Comparative Examples 5 and 6, the inclusion of both the saturated nitrile-based compound and the unsaturated nitrile-based compound is beneficial in improving the energy retention and resistance properties after high voltage charging and high temperature storage.

In addition, it is determined that among Examples 1 to 4, Examples 1 and 4 in which a weight ratio of the first additive to the second additive was 2:1 exhibited the greatest improvement in performance.

## Claims

1. A non-aqueous electrolyte for a lithium secondary battery comprising:

   an organic solvent;
   a lithium salt;
   a first additive which is a compound represented by Formula 1;
   a second additive which is lithium tetrafluoroborate; and
   a third additive comprising a saturated nitrile-based compound and an unsaturated nitrile-based compound,
   wherein the lithium salt is different from the second additive:

   [Formula 1]

   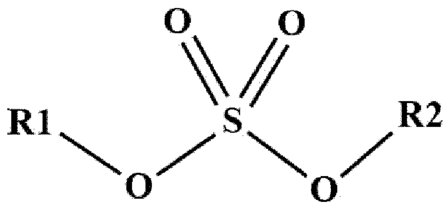

   in Formula 1,
   R1 and R2 are each independently an alkyl group having 1 to 5 carbon atoms, or R1 and R2 are bonded to form a ring having 2 to 10 carbon atoms comprising a sulfate group;
   **characterized in that**:
   the saturated nitrile-based compound is at least any one selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, ethylene glycol bis(2-cyanoethyl)ether, 1,3,6-hexane tricarbonitrile, and 1,2,3-tris(2-cyanoethyl)propane; and
   the unsaturated nitrile-based compound is at least any one selected from the group consisting of 1,4-dicyano-2-butene, 1,4-dicyano-2-methyl-2-butene, 1,4-dicyano-2-ethyl-2-butene, 1,4-dicyano-2, 3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

2. The non-aqueous electrolyte of claim 1, wherein the first additive is represented by Formula 1-1:

   [Formula 1-1]

   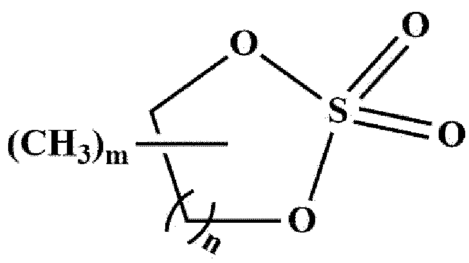

   in Formula 1-1,

   m is an integer of 0 to 6, and
   n is an integer of 1 or 2.

3. The non-aqueous electrolyte of claim 2, wherein in Formula 1-1, m is 0 and n is 1.

4. The non-aqueous electrolyte of claim 1, wherein the first additive is in an amount of 0.1 wt% to 2 wt% with respect to a total weight of the non-aqueous electrolyte.

**5.** The non-aqueous electrolyte of claim 1, wherein the second additive is in an amount of 0.1 wt% to 1 wt% with respect to a total weight of the non-aqueous electrolyte.

**6.** The non-aqueous electrolyte of claim 1, wherein a weight ratio of the first additive and the second additive is 1:1 to 3:1.

**7.** The non-aqueous electrolyte of claim 1, wherein the third additive, comprising the saturated nitrile-based compound and the unsaturated nitrile-based compound, is in an amount of 0.1 wt% to 2 wt% with respect to a total weight of the non-aqueous electrolyte.

**8.** The non-aqueous electrolyte of claim 1, further comprising a fourth additive which is vinylene carbonate, 1,3-propanesultone, or a mixture thereof.

**9.** A lithium secondary battery comprising:

a positive electrode comprising a positive electrode active material;
a negative electrode comprising a negative electrode active material;
a separator interposed between the positive electrode and the negative electrode; and
the non-aqueous electrolyte of claim 1.

**10.** The lithium secondary battery of claim 9, wherein the positive electrode active material comprises a lithium composite transition metal oxide represented by Formula 2:

[Formula 2] $Li_{1+e}(Ni_aCo_bMn_cM_d)O_2$

in Formula 2,

M is at least any one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
a, b, c, and d are each an atomic fraction of independent elements, and
$0 \le e \le 0.5$, $0.8 \le a < 1$, $0 < b \le 0.15$, $0 < c \le 0.15$, $0 \le d \le 0.1$, and $a+b+c+d=1$ are satisfied.

**11.** The lithium secondary battery of claim 9, wherein the positive electrode further comprises a compound represented by Formula 3:

[Formula 3] $Li_2M^a{}_{1-k}M^b{}_kO_2$

in Formula 3,

$M^a$ is at least any one element selected from the group consisting of Ni and Cu,
$M^b$ is at least any one element selected from the group consisting of Mn, Fe, Co, Zn, Mg, and Cd, and
k satisfies $0 \le k < 1$.

**12.** The lithium secondary battery of claim 9, wherein the positive electrode has an initial efficiency of 85% to 89%.

**13.** The lithium secondary battery of claim 9, wherein the negative electrode active material comprises a silicon-based material, a carbon-based material, or a mixture thereof.

## Patentansprüche

**1.** Nichtwässriger Elektrolyt für eine Lithiumsekundärbatterie, umfassend:

ein organisches Lösungsmittel,
ein Lithiumsalz,
ein erstes Additiv, das eine durch Formel 1 dargestellte Verbindung ist,
ein zweites Additiv, das Lithiumtetrafluorborat ist, und
ein drittes Additiv, das eine Verbindung auf Basis eines gesättigten Nitrils und einer Verbindung auf Basis eines ungesättigten Nitrils umfasst,

wobei sich das Lithiumsalz von dem zweiten Additiv unterscheidet:

[Formel 1]

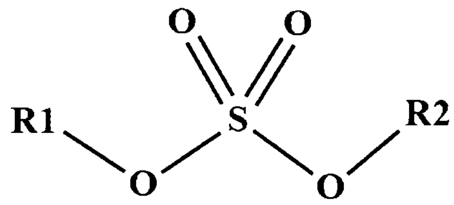

in Formel 1

R1 und R2 jeweils eine Alkylgruppe mit 1 bis 5 Kohlenstoffatomen sind oder R1 und R2 verbunden sind, um einen Ring zu bilden, der 2 bis 10 Kohlenstoffatome aufweist und eine Sulfatgruppe umfasst,

**dadurch gekennzeichnet, dass**:

die Verbindung auf Basis eines gesättigten Nitrils mindestens eine, ausgewählt aus der Gruppe, bestehend aus Succinonitril, Adiponitril, Acetonitril, Propionitril, Butyronitril, Valeronitril, Caprylonitril, Heptannitril, Cyclopentancarbonitril, Cyclohexancarbonitril, Ethylenglykolbis(2-cyanoethyl)ether, 1,3,6-Hexantricarbonitril und 1,2,3-Tris(2-cyanoethyl)propan, ist und

die Verbindung auf Basis eines ungesättigten Nitrils mindestens eine, ausgewählt aus der Gruppe, bestehend aus 1,4-Dicyano-2-buten, 1,4-Dicyano-2-methyl-2-buten, 1,4-Dicyano-2-ethyl-2-buten, 1,4-Dicyano-2, 3-dimethyl-2-buten, 1,4-Dicyano-2,3-diethyl-2-buten, 1,6-Dicyano-3-hexen, 1,6-Dicyano-2-methyl-3-hexen, 1,6-Dicyano-2-methyl-5-methyl-3-hexen, 2-Fluorbenzonitril, 4-Fluorbenzonitril, Difluorbenzonitril, Trifluorbenzonitril, Phenylacetonitril, 2-Fluorphenylacetonitril und 4-Fluorphenylacetonitril, ist.

**2.** Nichtwässriger Elektrolyt nach Anspruch 1, wobei das erste Additiv durch Formel 1-1 dargestellt ist:

[Formel 1-1]

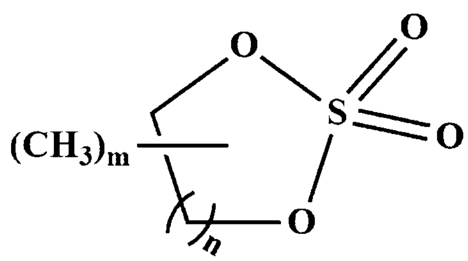

in Formel 1-1

m eine ganze Zahl von 0 bis 6 ist und
n eine ganze Zahl von 1 oder 2 ist.

**3.** Nichtwässriger Elektrolyt nach Anspruch 2, wobei in Formel 1-1 m 0 ist und n 1 ist.

**4.** Nichtwässriger Elektrolyt nach Anspruch 1, wobei das erste Additiv in einer Menge von 0,1 Gew.-% bis 2 Gew.-% in Bezug auf das Gesamtgewicht des nichtwässrigen Elektrolyten vorliegt.

**5.** Nichtwässriger Elektrolyt nach Anspruch 1, wobei das zweite Additiv in einer Menge von 0,1 Gew.-% bis 1 Gew.-% in Bezug auf ein Gesamtgewicht des nichtwässrigen Elektrolyten vorliegt.

**6.** Nichtwässriger Elektrolyt nach Anspruch 1, wobei ein Gewichtsverhältnis des ersten Additivs und des zweiten Additivs 1:1 bis 3:1 beträgt.

**7.** Nichtwässriger Elektrolyt nach Anspruch 1, wobei das dritte Additiv, das die Verbindung auf Basis eines gesättigten Nitrils und die Verbindung auf Basis eines ungesättigten Nitrils umfasst, in einer Menge von 0,1 Gew.-% bis 2 Gew.-%

in Bezug auf ein Gesamtgewicht des nichtwässrigen Elektrolyten vorliegt.

**8.** Nichtwässriger Elektrolyt nach Anspruch 1, ferner umfassend ein viertes Additiv, das Vinylencarbonat, 1,3-Propansulton oder eine Mischung davon ist.

**9.** Lithiumsekundärbatterie, umfassend:

eine positive Elektrode, die ein positives Elektrodenaktivmaterial umfasst,
eine negative Elektrode, die ein negatives Elektrodenaktivmaterial umfasst,
einen Separator, der zwischen der positiven Elektrode und der negativen Elektrode eingefügt ist, und
den nichtwässrigen Elektrolyt nach Anspruch 1.

**10.** Lithiumsekundärbatterie nach Anspruch 9, wobei das positive Elektrodenaktivmaterial ein durch Formel 2 dargestelltes Lithiumübergangsmetallmischoxid umfasst:

[Formel 2] $Li_{1+e}(Ni_aCo_bMn_cM_d)O_2$

in Formel 2

M mindestens ein Element, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, ist,
a, b, c und d jeweils ein Atomverhältnis der unabhängigen Elemente ist und
$0 \leq e \leq 0{,}5$, $0{,}8 \leq a < 1$, $0 < b \leq 0{,}15$, $0 < c \leq 0{,}15$, $0 \leq d \leq 0{,}1$ und $a+b+c+d=1$ erfüllt sind.

**11.** Lithiumsekundärbatterie nach Anspruch 9, wobei die positive Elektrode ferner eine durch Formel 3 dargestellte Verbindung umfasst:

[Formel 3] $Li_2M^a_{1-k}M^b_kO_2$

in Formel 3

$M^a$ mindestens ein Element, ausgewählt aus der Gruppe, bestehend aus Ni und Cu, ist
$M^b$ mindestens ein Element, ausgewählt aus der Gruppe, bestehend aus Mn, Fe, Co, Zn, Mg und Cd, ist und
k $0 \leq k < 1$ erfüllt.

**12.** Lithiumsekundärbatterie nach Anspruch 9, wobei die positive Elektrode einen Anfangswirkungsgrad von 85 % bis 89 % aufweist.

**13.** Lithiumsekundärbatterie nach Anspruch 9, wobei das negative Elektrodenaktivmaterial ein Material auf Siliciumbasis, ein Material auf Kohlenstoffbasis oder eine Mischung davon umfasst.

## Revendications

**1.** Électrolyte non aqueux pour une batterie secondaire au lithium, comprenant : un solvant organique ;

un sel de lithium ;
un premier additif qui est un composé représenté par la Formule 1 ;
un deuxième additif qui est du tétrafluoroborate de lithium ; et
un troisième additif comprenant un composé à base de nitrile saturé et un composé à base de nitrile insaturé, dans lequel le sel de lithium est différent du deuxième additif :

[Formule 1]

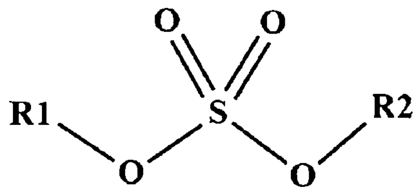

dans la Formule 1,

R1 et R2 sont chacun indépendamment un groupe alkyle comprenant de 1 à 5 atomes de carbone, ou R1 et R2 sont liés pour former un cycle comprenant de 2 à 10 atomes de carbone comprenant un groupe sulfate ;

**caractérisé en ce que** :

le composé à base de nitrile saturé est au moins un quelconque choisi dans le groupe consistant en succinonitrile, adiponitrile, acétonitrile, propionitrile, butyronitrile, valéronitrile, caprylonitrile, heptanénitrile, cyclopentane carbonitrile, cyclohexane carbonitrile, éthylène glycol-bis-(2-cyanoéthyl)-éther, hexane-1,3,6-tricarbonitrile, et 1,2,3-tris(2-cyanoéthyl)propane ; et

le composé à base de nitrile insaturé est au moins un quelconque choisi dans le groupe consistant en 1,4-dicyano-2-butène, 1,4-dicyano-2-méthyl-2-butène, 1,4-dicyano-2-éthyl-2-butène, 1,4-dicyano-2, 3-diméthyl-2-butène, 1,4-dicyano-2,3-diéthyl-2-butène, 1,6-dicyano-3-hexène, 1,6-dicyano-2-méthyl-3-hexène, 1,6-dicyano-2-méthyl-5-méthyl-3-hexène, 2-fluorobenzonitrile, 4-fluorobenzonitrile, difluorobenzonitrile, trifluorobenzonitrile, phénylacétonitrile, 2-fluorophénylacétonitrile, et 4-fluorophénylacétonitrile.

2. Électrolyte non aqueux selon la revendication 1, dans lequel le premier additif est représenté par la Formule 1-1 :

[Formule 1-1]

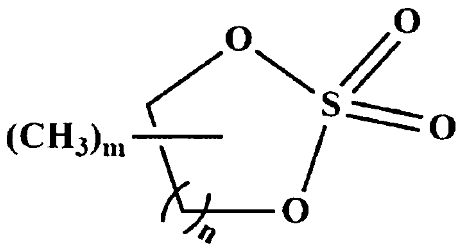

dans la Formule 1-1,

m est un nombre entier de 0 à 6, et
n est un nombre entier de 1 ou 2.

3. Électrolyte non aqueux selon la revendication 2, dans lequel dans la Formule 1-1, m est 0 et n est 1.

4. Électrolyte non aqueux selon la revendication 1, dans lequel le premier additif est dans une quantité de 0,1 % en poids à 2 % en poids par rapport à un poids total de l'électrolyte non aqueux.

5. Électrolyte non aqueux selon la revendication 1, dans lequel le deuxième additif est dans une quantité de 0,1 % en poids à 1 % en poids par rapport à un poids total de l'électrolyte non aqueux.

6. Électrolyte non aqueux selon la revendication 1, dans lequel un rapport en poids entre le premier additif et le deuxième additif est de 1:1 à 3:1.

7. Électrolyte non aqueux selon la revendication 1, dans lequel le troisième additif, comprenant le composé à base de nitrile saturé et le composé à base de nitrile insaturé, est dans une quantité de 0,1 % en poids à 2 % en poids par rapport à un poids total de l'électrolyte non aqueux.

8. Électrolyte non aqueux selon la revendication 1, comprenant en outre un quatrième additif qui est du carbonate de vinylène, de la 1,3-propanesultone, ou un mélange de ceux-ci.

**9.** Batterie secondaire au lithium comprenant :

une électrode positive comprenant un matériau actif d'électrode positive ;
une électrode négative comprenant un matériau actif d'électrode négative ;
un séparateur interposé entre l'électrode positive et l'électrode négative ; et l'électrolyte non aqueux selon la revendication 1.

**10.** Batterie secondaire au lithium selon la revendication 9, dans laquelle le matériau actif d'électrode positive comprend un oxyde de métal de transition composite au lithium représenté par la Formule 2 :

[Formule 2] $Li_{1+e}(Ni_aCo_bMn_cM_d)O_2$

dans la Formule 2,

M est au moins un élément quelconque choisi dans le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo,
a, b, c, et d sont chacun une fraction atomique d'éléments indépendants, et
$0 \leq e \leq 0{,}5$, $0{,}8 \leq a \leq 1$, $0 \leq b \leq 0{,}15$, $0 \leq c \leq 0{,}15$, $0 \leq d \leq 0{,}1$, et $a+b+c+d = 1$ sont satisfaites.

**11.** Batterie secondaire au lithium selon la revendication 9, dans laquelle l'électrode positive comprend en outre un composé représenté par la Formule 3 :

[Formule 3] $Li_2M^a{}_{1-k}M^b{}_kO_2$

dans la Formule 3,

$M^a$ est au moins un élément quelconque choisi dans le groupe consistant en Ni et Cu,
$M^b$ est au moins un élément quelconque choisi dans le groupe consistant en Mn, Fe, Co, Zn, Mg et Cd, et
k satisfait $0 \leq k < 1$.

**12.** Batterie secondaire au lithium selon la revendication 9, dans laquelle l'électrode positive présente un rendement initial compris entre 85 % et 89 %.

**13.** Batterie secondaire au lithium selon la revendication 9, dans laquelle le matériau actif d'électrode négative comprend un matériau à base de silicium, un matériau à base de carbone, ou un mélange de ceux-ci.

[FIG. 1]

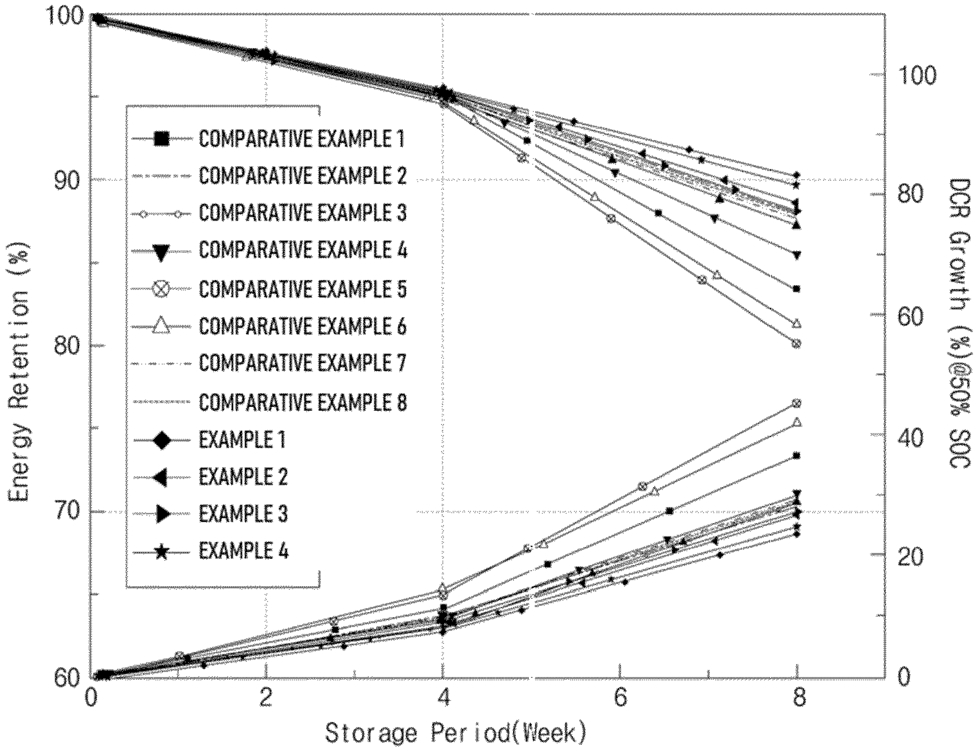
100
90
80
70
60
Energy Retention (%)
0
2
4
6
8
Storage Period(Week)
100
80
60
40
20
0
DCR Growth (%)@50% SOC
COMPARATIVE EXAMPLE 1
COMPARATIVE EXAMPLE 2
COMPARATIVE EXAMPLE 3
COMPARATIVE EXAMPLE 4
COMPARATIVE EXAMPLE 5
COMPARATIVE EXAMPLE 6
COMPARATIVE EXAMPLE 7
COMPARATIVE EXAMPLE 8
EXAMPLE 1
EXAMPLE 2
EXAMPLE 3
EXAMPLE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210114193
- CN 111900480 A
- KR 20160006096 A